# EUROPEAN PATENT APPLICATION

(11) **EP 2 100 770 A2**
(43) Date of publication of application: **16.09.2009**
(21) Application number: 09003621.1
(22) Date of filing: 12.03.2009
(51) Int. Cl.: B60Q 1/14

(54) **Stalk switch device**

(30) Priority: 13.03.2008 JP 2008064607
(71) Applicant: ALPS ELECTRIC CO., LTD., Tokyo 145-8501 (JP)
(72) Inventor: Urakawa, Masatsugu, Tokyo 145-8501 (JP); Kowase, Noriyuki, Tokyo 145-8501 (JP); Koizumi, Hidefumi, Tokyo 145-8501 (JP); Terasaki, Hideaki, Tokyo 145-8501 (JP)
(74) Representative: Klunker . Schmitt-Nilson . Hirsch

(57) **Abstract**

Provided is a stalk switch device which does not cause a contact failure of a switching device of an operating ring upon rotating and is suitable for a long life-span. The stalk switch device is configured such that a permanent magnet (9) is fixed to a driven member which is driven by rotation of an operating ring (7), and a change in magnetic field caused by the movement of the permanent magnet (9) is detected by a giant magnetoresistance (GMR) sensor (12) mounted on a circuit board (3) in a housing (1) The operating ring (7), the driven member, and the circuit board (3) are retained by a holder (2), and the holder (2) is fixed to the housing (1). As the driven member, for example, a cylindrical rotating member (8) formed integrally with the operating ring (7), a rotation shaft member (23) rotated by a driving gear (22) which is rotated along with the operating ring (7), or a slider (21) which is driven by a rotating driving member (20) which is rotated along with the operating ring (7) to move linearly, is used.

## Description

### Cross Reference to Related Applications

The present invention contains subject matter related to Japanese Patent Application No. 2008-064607 filed in the Japanese Patent Office on March 13, 2008, the entire contents of which being incorporated herein by reference.

### BACKGROUND

### 1. Technical Field

The present invention relates to a stalk switch device which is disposed near a steering wheel of a car to be used for switching of a headlamp, a windscreen wiper, or the like.

### 2. Related Art

In general, a pair of stalk switch devices is disposed on both sides, that is, left and right sides of a housing fixed to a steering column or the like, thereby constituting a combination switch. Particularly, a configuration in which switching of turn signals, beams of headlamps, a windscreen wiper, and the like is performed by moving a cylindrical housing of the stalk switch device upwards, downwards, forwards, or backwards, and on/off switching of the headlamps is performed by rotating about the housing an operating ring supported by the housing, has been widely known.

In order for the stalk switch device to be implemented with a miniaturization of the entire device and a simplification of a structure, a configuration in which a circuit board which extends in a longitudinal direction of a cylindrical housing is disposed in the housing and a rotary switch mounted on the circuit board is rotated along with the rotation of an operating ring has been known (for example, see JP-A-10-269898). In this conventional example, a first gear having a number of teeth along a rotation direction of the operating ring is formed integrally with the operating ring, a spindle of a second gear engaged with the teeth of the first gear is perpendicular to an axial direction of the operating ring, and an end portion of the spindle is fitted on a rotation shaft of the rotary switch as a spline. When the operating ring is rotated, the first gear rotates the rotation shaft of the rotary switch with the second gear and the spindle interposed therebetween, and an electric signal corresponding to the rotation of the operating ring is output from the rotary switch. In addition, a push switch mounted on the circuit board of the housing is pressed by an operating key exposed from an opening of the housing in order to be operated. When the configuration in which the rotation of the operating ring is transmitted to the second gear with the first gear interposed therebetween, both of the rotary switch and the push switch and the like can be provided on the single circuit board extending in the longitudinal direction of the housing, so that the miniaturization of the entire device and the simplification of the structure can be easily achieved.

### SUMMARY

However, in the aforementioned stalk switch device, upon rotation of the operating ring, switching is performed by sliding a wiper (movable contact) mounted to a rotor portion formed integrally with the rotation shaft of the rotary switch with respect to a contact pattern of a stator. Therefore, the contact is abraded by the repeated rotation of the operating ring as time elapses, and there are concerns about conduction failures caused by oxidization or sulfurization of the contact.

It is desirable to provide a stalk switch device which does not cause a contact failure of a switching device of an operating ring upon rotating and is suitable for a long life-span.

According to an aspect of the invention, the stalk switch device includes: a cylindrical housing; an operating ring which is supported to rotate with respect to the housing; a driven member which is driven in the housing by the rotation of the operating ring; a permanent magnet fixed to the driven member; a circuit board disposed in the housing in a longitudinal direction of the housing; and a magnetic sensor mounted on the circuit board, wherein a change in magnetic field in the housing caused by the movement of the permanent magnet which moves along with the driven member is detected by the magnetic sensor.

In the stalk switch device according to the aspect of the invention, when the operating ring is rotated, the driven member in the housing is driven, and the permanent magnet fixed to the driven member is moved. Therefore, the magnetic field in the housing generated by the movement of the permanent magnet is changed, and the change in magnetic field results in a change in electric resistance of the magnetic sensor. Accordingly, a rotation position of the operating ring can be detected on the basis of the change in resistance of the magnetic sensor, and upon the rotation of the operating ring, without sliding a wiper (movable contact) in a contact pattern, switching can be performed. As a result, a conduction failure (contact failure) caused by abrasion or oxidization of a contact point does not occur in the switching device of the operating ring, and a longer life-span of the stalk switch device can be implemented.

With such a configuration, when the holder is fixed in the housing, rotatably retains the operating ring and the driven member, and retains the circuit board, the stalk switch device can be assembled by including a half-finished product formed by mounting the operating ring, the driven member, the circuit board, and the like to the holder, in.the housing. Therefore, the assembling process can be easily performed.

In addition, with such a configuration, when the driven member is a cylindrical rotating member which is formed integrally with the operating ring and has a peripheral wall to which the permanent magnet is fixed, the permanent magnet can be moved in an arc path around the magnetic sensor as the operating ring is rotated. Therefore, a change in magnetic field in the housing caused by the change in position of the permanent magnet can be detected by the magnetic sensor.

In addition, with such a configuration, when the stalk switch device further includes a holder fixed in the housing, wherein the operating ring includes a driving gear which has a number of teeth along a rotation direction of the operating ring and is formed integrally with the operating ring, and wherein the driven member includes: a spindle portion which extends in a direction perpendicular to an axial direction of the operating ring to have an end portion to which the permanent magnet is fixed, and is rotatably supported by the holder about a rotation axis perpendicular to the axis of the operating ring; and a gear portion which is formed integrally with the spindle portion and engaged with the teeth of the driving gear, the permanent magnet can be rotated around the magnetic sensor as the operating ring is rotated. Therefore, a change in magnetic field in the housing caused by the rotation of the permanent magnet can be detected by the magnetic sensor.

In addition, with such a configuration, when the stalk switch device further includes: a holder which is fixed in the housing, rotatably retains the operating ring, and retains the circuit board; and a cylindrical rotating driving member formed integrally with the operating ring, wherein a peripheral wall of the rotating driving member is provided with an engagement groove extending in an inclined direction, and wherein the driven member is a slider which has an engagement protrusion engaged with the engagement groove and slides linearly with respect to the rotating driving member with the engagement protrusion interposed therebetween upon rotating, the permanent magnet can be linearly moved around the magnetic sensor as the operating ring is rotated. Therefore, a change in magnetic field in the housing caused by the change in position of the permanent magnet can be detected by the magnetic sensor.

Moreover, with such a configuration, an angle between the engagement groove and a rotation axis of the operating ring in a central region of a movement range of the permanent magnet is set to be greater than those in other regions. In this configuration, although a plurality of positions of the permanent magnet exist in different regions, positions of the permanent magnet close to the central region from among the plurality of positions are moved to the central region or to the vicinities thereof so that the output voltages of the magnetic sensor at the positions do not overlap with each other. Therefore, switching requiring many steps can be performed.

In the stalk switch device according to the aspect of the invention, when the operating ring is rotated, the driven member is driven, and the permanent magnet is moved. Therefore, the change in magnetic field in the housing caused by the movement of the permanent magnet can be detected by the magnetic sensor, and on the basis of the change in resistance of the magnetic sensor, the rotation position of the operating ring can be detected. Therefore, upon the rotation of the operating ring, without sliding a wiper (movable contact) in a contact pattern, switching can be performed. As a result, a conduction failure (contact failure) caused by abrasion or oxidization of a contact point does not occur, and the stalk switch device suitable for a longer life-span can be provided.

### BRIEF DESCRIPTION OF THE DRAWINGS

Fig. 1 is an exploded perspective view illustrating a stalk switch device according to a first embodiment of the invention.
Fig. 2 is a perspective view illustrating an internal structure of the stalk switch device according to the first embodiment, where portions thereof are omitted.
Fig. 3 is a sectional view illustrating a main portion of Fig. 2.
Fig. 4 is a plan view illustrating a cylindrical rotating member according to the first embodiment.
Figs. 5A to 5C are explanatory views illustrating a change in position of a permanent magnet with a rotation of the cylindrical rotating member according to the first embodiment.
Fig. 6 is a circuit diagram illustrating a giant magnetoresistance (GMR) sensor illustrated in Fig. 5.
Fig. 7 is an explanatory view illustrating a relationship between a movement distance of the permanent magnet illustrated in Fig. 5 and an output voltage of the GMR sensor.
Fig. 8 is an exploded perspective view illustrating a stalk switch device according to a second embodiment of the invention, where a housing and other portions are omitted.
Figs. 9A to 9C are explanatory views illustrating operations of a rotating driving member and a slider illustrated in Fig. 8.
Figs. 10A to 10C are explanatory views illustrating a change in position of a permanent magnet corresponding to Figs. 9A to 9C.
Fig. 11 is an explanatory view illustrating a relationship between a position of the permanent magnet illustrated in Figs. 10A to 10C and an output voltage of a GMR sensor.
Fig. 12 is an explanatory view illustrating a modified example of an engagement groove provided to the rotating driving member according to the second embodiment.
Fig. 13 is an exploded perspective view illustrating a stalk switch device according to a third embodiment of the invention, where a housing and other portions are omitted.
Fig. 14 is an explanatory view illustrating a main portion of the stalk switch device according to the third embodiment.
Fig. 15 is an exploded perspective view illustrating a stalk switch device according to a fourth embodiment of the invention, where a housing and other portions are omitted.
Fig. 16 is an explanatory view illustrating a main portion of the stalk switch device according to the fourth embodiment.

### DESCRIPTION OF EXEMPLARY EMBODIMENTS

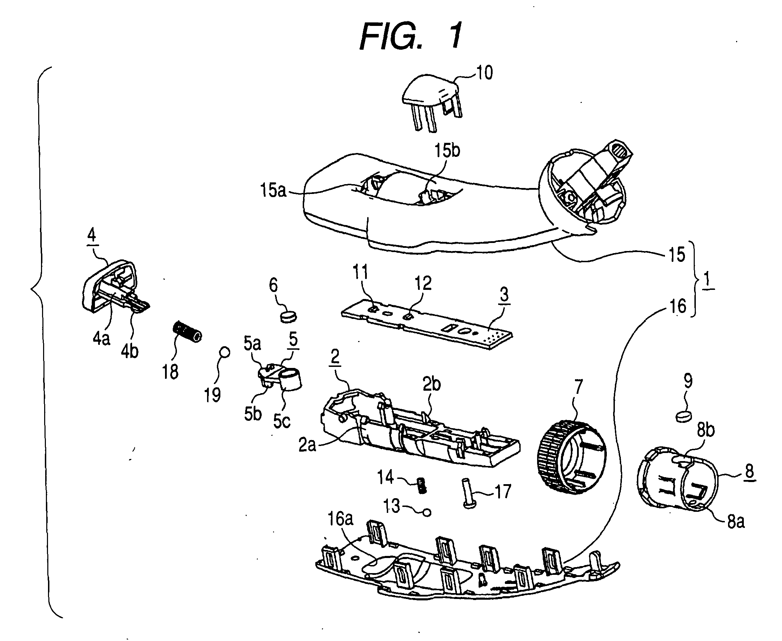

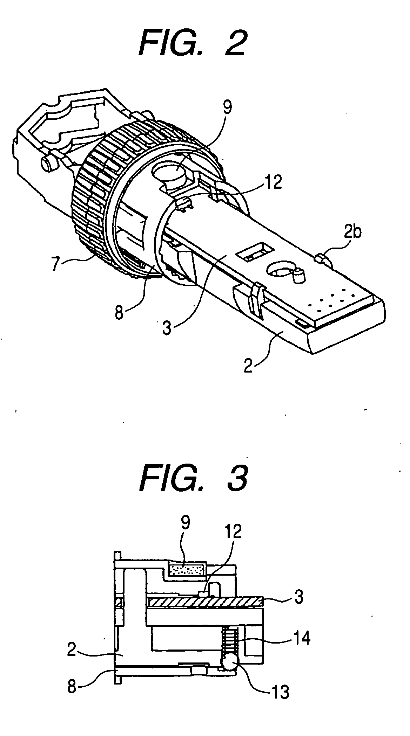

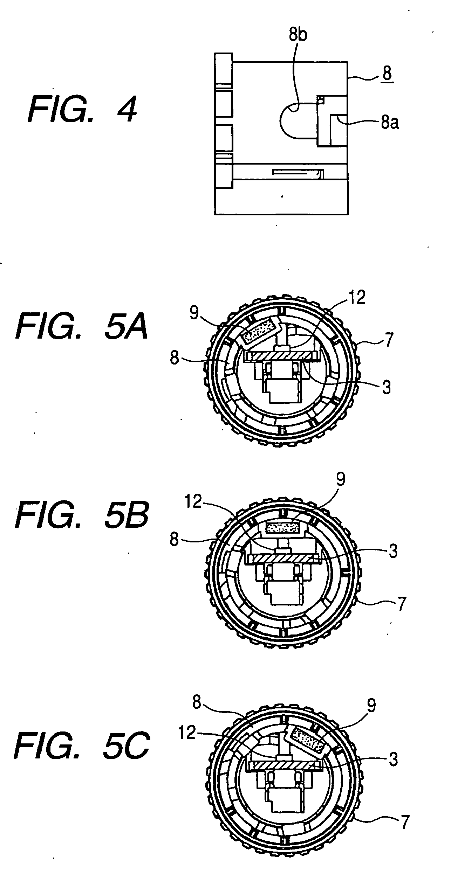

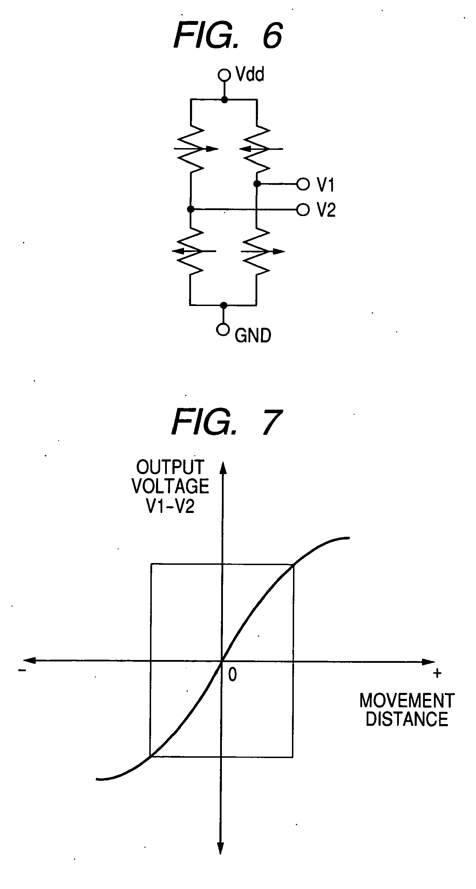

Exemplary embodiments of the invention will now be described with reference to the accompanying drawings. Fig. 1 is an exploded perspective view illustrating a stalk switch device according to a first embodiment of the invention. Fig. 2 is a perspective view illustrating an internal structure of the stalk switch device according to the first embodiment, were portions thereof are omitted. Fig. 3 is a sectional view illustrating a main portion of Fig. 2. Fig. 4 is a plan view illustrating a cylindrical rotating member according to the first embodiment. Figs. 5A to 5C are explanatory views illustrating a change in position of a permanent magnet with a rotation of the cylindrical rotating member according to the first embodiment. Fig. 6 is a circuit diagram illustrating a giant magnetoresistance (GMR) sensor illustrated in Fig. 5. Fig. 7 is an explanatory view illustrating a relationship between a movement distance of the permanent magnet illustrated in Fig. 5 and an output voltage of the GMR sensor.

The stalk switch device illustrated in Figs. 1 to 7 includes a cylindrical housing. 1 constituting a portion of a combination switch, a holder 2 which is included and retained in the housing 1, a circuit board 3 retained on the holder 2, an operating knob 4 which is movably supported by the holder 2 to be moved at a front end of the housing 1, a rotating member 5 to which a permanent magnet 6 is fixed to be rotatably supported by the holder 2, an operating ring 7 of which a portion is exposed from the housing 1 to be rotatably operated, a cylindrical rotating member 8 which is rotatably supported by the holder 2 and formed integrally with the operating ring 7, a permanent magnet 9 fixed to an outer peripheral surface of the cylindrical rotating member 8, an operating key 10 which is liftably and lowerably supported by the housing 1 to be pushed, and the like. In addition, on the circuit board 3, giant magnetoresistance sensors 11 and 12 as magnetic sensors for detecting a change in magnetic field inside the housing caused by movement of the permanent magnets 6 and 9, and a push switch not shown which is driven at the time of pushing the operating key 10 are mounted. Hereinafter, the giant magnetoresistance sensor is abbreviated to the GMR sensor.

The housing 1 is shaped as a cylindrical member constituted by a casing 15 having a lower opening and a cover 16 for covering the lower opening of the casing 15. The casing 15 and the cover 16 are integrated by snap-fastening. A longitudinal front end portion of the casing 15 is provided with an opening not shown, and the operating knob 4 is exposed from the opening. At portions of the casing 15 and the cover 16 facing each other, openings 15a and 16a are formed, respectively, and the openings 15a and 16a expose portions of the operating ring 7. In addition to the opening 15a, the casing 15 is provided with an opening 15b, and the opening 15b exposes the operating key 10.

The holder 2 is a long member extending in a longitudinal direction of the housing 1 and fixed to the casing 15 by a screw 17. The holder 2 is provided with a half-cylindrical portion 2a, and the cylindrical rotating member 8 is engaged with an outer surface of the half-cylindrical portion 2a to be rotatably retained. In the half-cylindrical portion 2a, a metallic ball 13 to be engaged with and released from a click recess 8a of the cylindrical rotating member 8, and a spring 14 for elastically biasing the metallic ball 13, are retained. The holder 2 is provided with locking protrusions 2b. As the locking protrusions 2b retain the circuit board 3, the circuit board 3 can extend in the longitudinal direction of the housing 1.

The operating knob 4 is attached to the front end portion of the holder 2 by snap-fastening to be movably supported. The operating knob 4 is provided with a cylindrical portion 4a protruding inside the housing 1 and a driving protrusion 4b. As a spring 18 stored in the cylindrical portion 4a elastically biases a pressing element 19, the pressing element 19 elastically contacts to a cam face 5a of the rotating member 5. In addition, the driving protrusion 4b of the operating knob 4 is engaged with a driven portion 5b of the rotating member 5. The rotating member 5 is rotatably supported by the holder 2, and to a shaft portion 5c of the rotating member 5, the disc-shaped permanent magnet 6 facing the GMR sensor 11 with the circuit board 3 interposed therebetween, is fixed by press-fitting or adhesive-bonding. In addition, when the operating knob 4 is moved, the rotating member 5 is rotated with the driving protrusion 4b interposed therebetween, and the permanent magnet 6 formed integrally with the shaft portion 5c is correspondingly rotated. The rotation of the permanent magnet 6 results in a change in magnetic field in the housing 1, and an electrical resistance of the GMR sensor 11 is correspondingly changed.

Therefore, on the basis of the change in resistance of the GMR sensor 11, the moved position of the operating knob 4 can be detected. Accordingly, upon moving of the operating knob 4, without sliding a wiper (movable contact) in a contact pattern, switching can be performed. The permanent magnet 6 is magnetized so that the one edge portion with respect to a bisector passing through the center as the axis of symmetry serves as a north pole, and the other edge portion serves as a south pole. In addition, when the operating knob 4 is moved, the pressing element 19 moves along the cam face 5a of the rotating member 5. Here, when the pressing element 19 goes over a protruding surface of the cam face 5a, a click feel occurs.

The operating ring 7 is fitted to an outer surface of the cylindrical rotating member 8 to be integrated, and the cylindrical rotating member 8 is rotatably retained by the half-cylindrical portion 2a of the holder 2. For a peripheral wall of the cylindrical rotating member 8, an inner surface is provided with a click recess 8a, and an outer surface is provided with a notch 8b. The metallic ball 13 that is elastically biased by the spring 14 can be engaged with and disengaged from the click recess 8a, and the disc-shaped permanent magnet 9 is fixed to the notch 8b by press-fitting or adhesive-bonding. The permanent magnet 9 is magnetized so that the planar section on the side facing the circuit board 3 serves as a north pole and the planar section on the other side serves as a south pole. In addition, as illustrated in Fig. 3, a side portion of the permanent magnet 9 faces the GMR sensor 12. When the operating ring 7 is rotated, the cylindrical rotating member 8 driven by the operating ring 7 is integrally rotated. Therefore, as illustrated in Fig. 5, the permanent magnet 9 moves in an arc path with respect to the GMR sensor 12. As a result, the movement of the permanent magnet 9 results in a change in magnetic field in the housing 1, and an electrical resistance of the GMR sensor 12 is correspondingly changed. Therefore, on the basis of the change in resistance of the GMR sensor 12, the rotation position of the operating ring 7 can be detected. Accordingly, upon the rotation of the operating ring 7, without sliding the wiper (movable contact) in the contact pattern, switching can be performed. In addition, upon the rotation of the operating ring 7, as the cylindrical rotating member 8 rotates, the metallic ball 13 is engaged with or disengaged from the click recess 8a, and a click feel occurs.

The GMR sensor 12 is described in detail. The GMR sensor 12 is configured such that 4 GMR elements each of which is formed by stacking a pinned magnetic layer and a free magnetic layer with a nonmagnetic intermediate layer interposed therebetween are connected to constitute a bridge circuit illustrated in Fig. 6 as a package. Specifically, arrows in Fig. 6 represent magnetization directions of the pinned magnetic layers of the GMR elements. Here, a side portion of the permanent magnet 9 faces the GMR sensor 12. Therefore, when the permanent magnet 9 is moved in an arc path as illustrated in Fig. 5, an external magnetic field in the housing 1 is changed by the movement of the permanent magnet 9, the magnetization direction of the free magnetic layer of each GMR element is changed, and correspondingly the electric resistance of the GMR sensor 12 is changed. As a result, in a state where a predetermined voltage Vdd is applied to the GMR sensor 12, an output voltage (V1-V2) is changed depending on a position of the permanent magnet 9, and a relationship of "movement distance of permanent magnet-output voltage of GMR sensor" as illustrated in Fig. 7 can be obtained. Therefore, on the basis of the output voltage shown as a substantially straight line enclosed by a dash line of Fig. 7, the rotation position of the operating ring 7 corresponding to each operating state of Figs. 5A to 5C can be detected.

Specifically, when the operating ring 7 is not rotated, the permanent magnet 9 is disposed at a position illustrated in Fig. 5B. Here, since the magnetization direction of the free magnetic layer is perpendicular to that of the pinned magnetic layer in each GMR element of the GMR sensor 12, the electrical resistances of the GMR elements are equal to each other, and the output voltage from the GMR sensor 12 becomes zero. However, when the operating ring 7 is rotated such that the permanent magnet 9 is disposed at a position illustrated in Fig. 5A or Fig. 5C, since the electrical resistance of each GMR element of the GMR sensor 12 is changed depending on the magnetization direction of the pinned magnetic layer, the output voltage from the GMR sensor 12 is also changed to a predetermined minus value or a predetermined plus value according to the rotation direction of the operating ring 7. Therefore, the change in position of the permanent magnet 9 caused by the rotation of the operating ring 7 can be detected by the GMR sensor 12, and switching according to the rotation of the operating ring 7 can be performed.

When the operating key 10 is pressed, a push switch not shown on the circuit board 3 is driven, and switching can be performed. However, the invention relates to the stalk switch device having the operating ring 8 that can be rotated with respect to the housing 1, and a switching mechanism using the operating key 10 or the operating knob 4 is not directly related to the invention, so that a detailed description thereof is omitted.

As described above, in the stalk switch device according to the embodiment, the permanent magnet 9 is fixed to the cylindrical rotating member 8 which is rotated along with the operating ring 7, and the change in magnetic field of the permanent magnet 9 caused by the rotation of the cylindrical rotating member 8 is detected by the GMR sensor 12. Therefore, on the basis of the change in resistance of the GMR sensor 12, the rotation position of the operating ring 7 can be detected. Accordingly, upon the rotation of the operating ring 7, without sliding the wiper (movable contact) in a contact pattern, switching can be performed. As a result, a conduction failure (contact failure) caused by abrasion or oxidization of a contact point does not occur, and a longer life-span of the stalk switch device can be implemented. Moreover, according to the embodiment, the change in magnetic field of the permanent magnet 6 upon the moving of the operating knob 4 is detected by the GMR sensor 11 to perform switching. In this aspect, avoiding the contact failure and the longer life-span can be implemented.

In the stalk switch device according to the embodiment, after mounting the operating ring 7, the cylindrical rotating member 8, and the circuit board 3 to the holder 2 fixed to the casing 15, this half-finished product is included in the housing 1 (the casing 15 and the cover 16) to assemble the stalk switch device. Therefore, the assembling process can be easily performed.

According to the first embodiment, the housing 1 is constituted by combining the casing 15 and the cover 16. However, the housing 1 may also be formed in one body into a cylindrical shape in advance.

In addition, as described above, the invention relates to the stalk switch device having the operating ring 7 which can be rotated with respect to the housing 1, so that the operating knob 4 and the operating key 10 can be properly omitted.

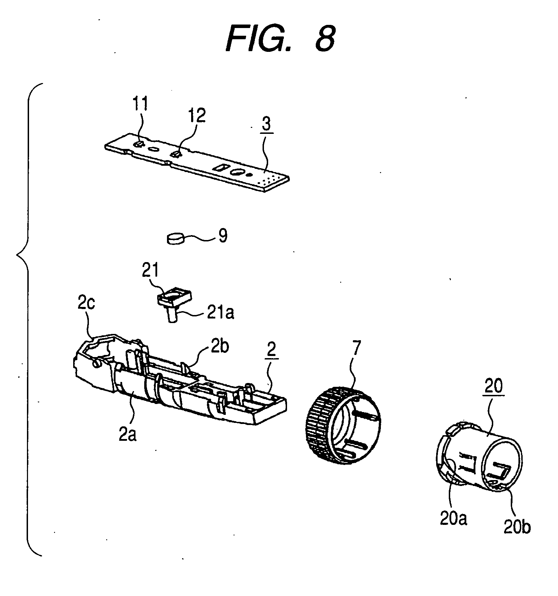

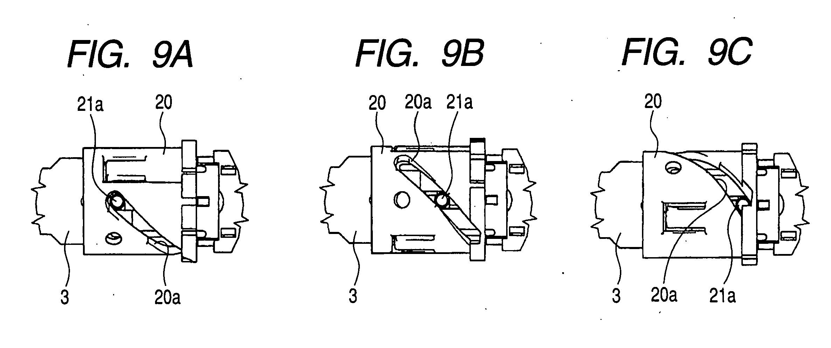

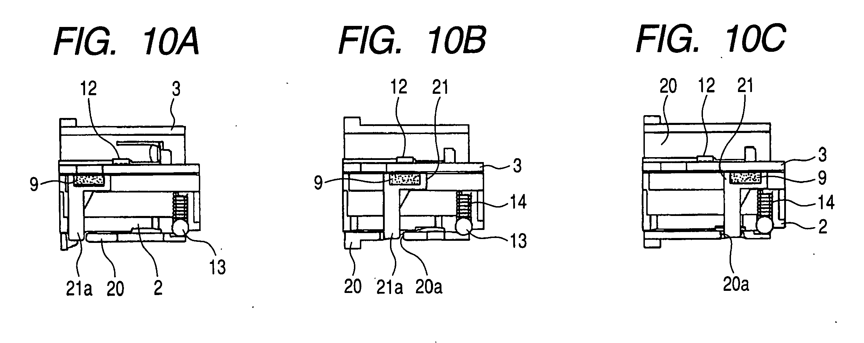

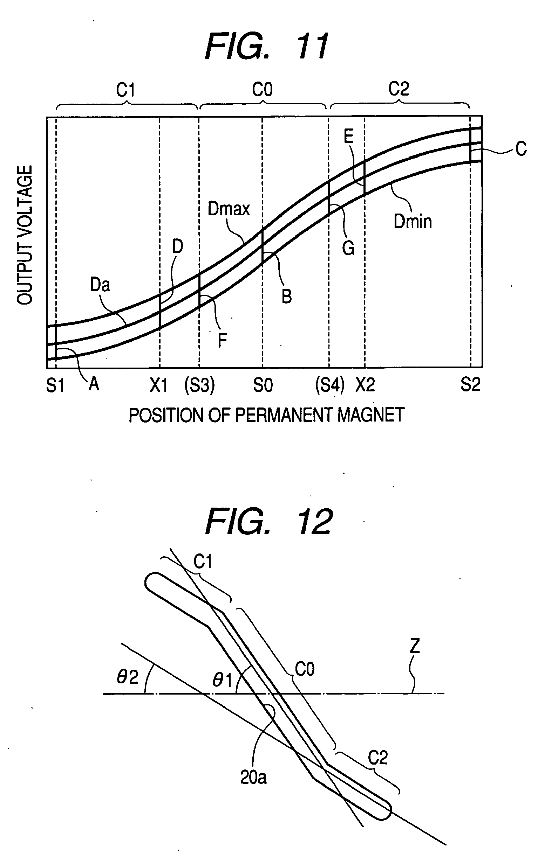

Fig. 8 is an exploded perspective view illustrating a stalk switch device according to a second embodiment of the invention, where a housing and other portions are omitted. Figs. 9A to 9C are explanatory views illustrating operations of a rotating driving member and a slider illustrated in Fig. 8. Figs. 10A to 10C are explanatory views illustrating a change in position of a permanent magnet corresponding to Figs. 9A to 9C. Fig. 11 is an explanatory view illustrating a relationship between a moving stroke of the permanent magnet illustrated in Figs. 10A to 10C and an output voltage of a GMR sensor. Fig. 12 is an explanatory view illustrating a modified example of an engagement groove provided to the rotating driving member according to the second embodiment. Like reference numerals denote like elements corresponding to Fig. 1, so that a detailed description thereof is omitted.

The stalk switch device according to the second embodiment includes a cylindrical rotating driving member 20 which is rotated along with the operating ring 7, and a slider 21 which is driven by the rotating driving member 20 to move linearly, instead of the aforementioned cylindrical rotating member 8. The stalk switch device of the second embodiment is different from that of the first embodiment in that the change in magnetic field in the housing 1 caused by the movement of the permanent magnet 9 fixed to the slider 21 is detected by the GMR sensor 12. A peripheral wall of the rotating driving member 20 is provided with an engagement groove 20a that is a long hole extending in a spirally inclined direction, and an inner surface of the rotating driving member 20 is provided with a click recess 20b having the same shape as the click recess 8a. In addition, the slider 21 is provided with an engagement protrusion 21a engaged with the engagement groove 20a, and as the rotating driving member 20 rotates along with the operating ring 7, the engagement protrusion 21a slides along an inner wall of the engagement groove 20a. Accordingly, the rotation movement is translated to the linear movement, and the slider 21 moves along the longitudinal direction of the circuit board 3. Therefore, as in the first embodiment, the change in magnetic field caused by the movement of the permanent magnet 9 is detected by the GMR sensor 12, and therefore the rotation position of the operating ring 7 can be detected.

Specifically, when the operating ring 7 is not rotated, as illustrated in Fig. 10B, a side portion of the permanent magnet 9 faces the GMR sensor 12, and the output voltage from the GMR sensor 12 becomes zero. However, when the operating ring 7 is rotated and the permanent magnet 9 is moved to a position illustrated in Fig. 10A or 10C, the output voltage from the GMR sensor 12 is changed to a predetermined minus value or a predetermined plus value depending on the rotation direction of the operating ring 7. Therefore, the change in position of the permanent magnet 9 which moves linearly as the operating ring 7 is rotated can be detected by the GMR sensor 12, and switching based on the rotation of the operating ring 7 can be performed. In addition, Figs. 9A, 9B, and 9C correspond to Figs. 10A, 10B, and 10C, respectively. Here, In Figs. 9A and 9C, the engagement protrusion 21a of the slider 21 is disposed at a different end of the engagement groove 20a, and the engagement protrusion 21a in Fig. 10B is disposed at the center position of the engagement groove 20a.

In addition, a relationship between the position of the permanent magnet 9 with respect to the GMR sensor 12 and the output voltage from the GMR sensor 12 which detects the change in magnetic field caused by the movement of the permanent magnet 9 is shown as a curve having the same shape as the characteristic curve in Fig. 7 used in the first embodiment. However, specifically, as illustrated in Fig. 11, although the positions of the permanent magnet 9 with respect to the GMR sensor 12 are the same, the output voltages have a width somehow and data spread is shown. The data spread is caused by an environmental temperature in use, a position deviation, a deviation in characteristics between the permanent magnet 9 and the GMR sensor 12, and the like, and varies in the range from data Dmax to data Dmin. Therefore, according to the embodiment, by rotating the operating ring 7 that rotates along with the rotating driving member 20 to 3 positions disposed at a predetermined angle in a peripheral direction, switching can be performed. Specifically, when the operating ring 7 is rotated at the predetermined angle, the rotating driving member 20 is rotated from the state of Fig. 9B to the state of Fig. 9A or 9C, and the permanent magnet 9 linearly moves from the position of Fig. 10B to the position of Fig. 10A or 10C. When the positions of the permanent magnet 9 of Figs. 10A, 10B, and 10C are denoted by S1, S0 (the central position in the movement range of the permanent magnet), and S2, respectively, the output voltage A (A is a value having a width) corresponding to the position S1, the output voltage B corresponding to the position S0, the output voltage C corresponding to the position S2 do not overlap with each other as illustrated in Fig. 11. Accordingly, the 3 positions of the permanent magnet 9 can be identified on the basis of the output voltages, and the 3 rotation positions of the operating ring can be accurately detected. In addition, according to the embodiment, in the state of Fig. 9B, the center of the GMR sensor 12 and the center of the permanent magnet 9 are aligned. In Figs. 10A, 10B, and 10C, the positions S0, S1, S2 of the permanent magnet are disposed at predetermined intervals, respectively.

However, when the operating ring 7 is rotated to 5 positions disposed at predetermined angles in the peripheral direction, as illustrated in Fig. 11, the permanent magnet 9 slidably moves to a position S1, a position X1 (in the middle of the positions S1 and S0), a position S0, a position X2 (in the middle of the positions S0 and S2), and a position S2, respectively. However, as the permanent magnet 9 becomes distant from the position S0, the rate of change of the output voltage of the GMR sensor 12 decreases. Accordingly, the output voltages at the positions partially overlap, the 5 positions of the permanent magnet 9 cannot be identified on the basis of the output voltages, and 5 rotation positions of the operating ring 7 cannot be detected. Specifically, in Fig. 11, the output voltage A corresponding to the position S1 partially overlaps with the output voltage D corresponding to the position X1, and the output voltage E corresponding to the position X2 partially overlaps with the output voltage C corresponding to the position S2. Therefore, the position of the permanent magnet 9 cannot be identified on the basis of the output voltages, and as a result, the 5 rotation positions of the operating ring 7 cannot be detected.

Therefore, as illustrated in a modified example of Fig. 12, angles of portions of the engagement groove 20a of the rotating driving member 20 with respect to the rotation axis Z of the operating ring 7 are set as follows. A region (central region) C0 of a central portion corresponding to the position S0 and the vicinities of the position S0 is at an angle of θ1, and other regions, that is, regions (both side regions) C1 and C2 corresponding to the positions S1 and S2 and the vicinities of the positions S1 and S2 are at an angle of θ2. Here, the engagement groove 20a is formed such that the angle θ1 corresponding to the region C0 is greater than the angle θ2 corresponding to the regions C1 and C2. Accordingly, although there is a little spread of the output voltage from the GMR sensor 12, switching can be performed at the 5 movement positions of the slider 21. Specifically, the engagement groove 20a is formed such that the movement distance of the slider 21 in the region C0 when the operating ring 8 is rotated at a predetermined angle is smaller than that (angle) in the regions C1 and C2. Accordingly, as illustrated in Fig. 11, a position of the permanent magnet 9 disposed between the positions S0 and S2 when the operating ring 7 is rotated becomes a position S4 closer to the position S0 than the position X2, and a position of the permanent magnet 9 disposed between he positions S0 and S1 becomes a position S3 closer to the position S0 than the position X1. Therefore, in Fig. 11, the output voltage B corresponding to the position S0, the output voltage A corresponding to the position S1, the output voltage F corresponding to the position S3, the output voltage G corresponding to the position S4, and the output voltage C corresponding to the position S2 can be set so as not to overlap with each other. In other words, by employing the construction of Fig. 12, as the position of the permanent magnet 9 when the operating ring 7 is rotated at the predetermined angles, among a plurality of positions which are in the regions C1 and C2 (both side regions) having smaller rates of change of the output voltage of the GMR sensor 12 and adjacent to the other sides, positions of the permanent magnet close to the central region C0 are moved to the central region C0 or to the vicinities, so that the output voltages of the GMR sensors at the positions do not overlap. Therefore, by using the engagement groove 20 in the modified example of Fig. 12, although there is the spread of the output voltage from the GMR sensor 12, the permanent magnet 9 can be identified on the basis of the output voltages, and the 5 rotation positions of the operating ring 7 can be accurately detected.

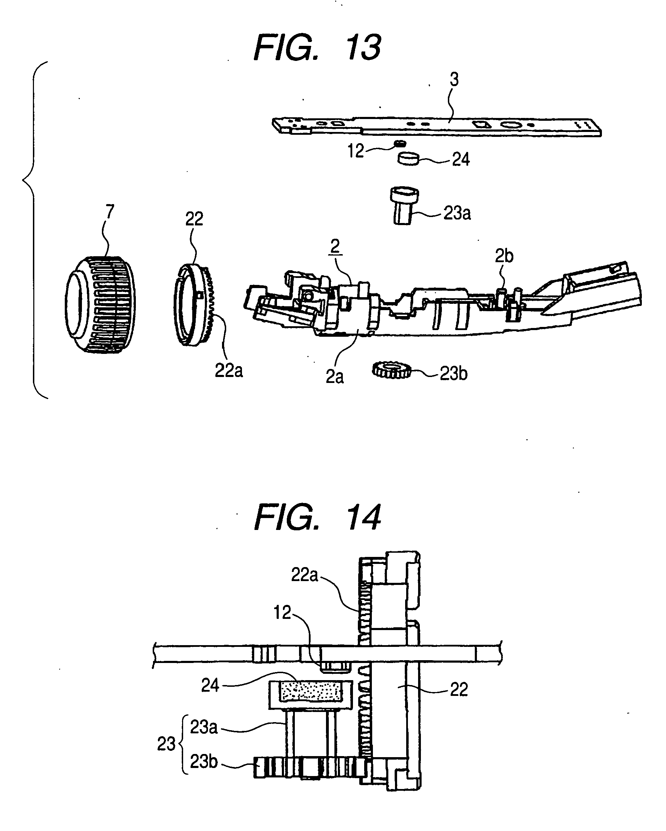

Fig. 13 is an exploded perspective view illustrating a stalk switch device according to a third embodiment of the invention, where a housing and other portions are omitted. Fig. 14 is an explanatory view illustrating a main portion of the stalk switch device according to the third embodiment. Like reference numerals denote like elements corresponding to Fig. 1, so that a detailed description thereof is omitted.

The stalk switch device of the third embodiment is different from that of the first embodiment in that the stalk switch device of the third embodiment has instead of the cylindrical rotating member 8, a driving gear 22 which rotates along with the operating ring 7, and a rotation shaft member 23 which is driven to rotate by the driving gear 22, and a change in magnetic field of the permanent magnet 24 fixed to the rotation shaft member 23 is detected by the GMR sensor 12. The driving gear 22 has a number of teeth 22a along the rotation direction of the operating ring 7, and the operating ring 7 is fitted to the driving gear 22. The rotation shaft member 23 includes a spindle portion 23a which extends in a direction perpendicular to an axial direction of the operating ring 7 to have an end portion to which the permanent magnet 24 is fixed, and a gear portion 23b which is fitted to the spindle portion 23a and engaged with the teeth 22a of the driving gear 22. As illustrated in Fig. 14, a planar section of the permanent magnet 24 faces the GMR sensor 12, and the permanent magnet 24 is magnetized so that the one edge with respect to a bisector passing through the center as the axis of symmetry serves as a north pole, and the other edge serves as a south pole. When the driving gear 22 is rotated along with the operating ring 7, the spindle portion 23a is rotated along with the gear portion 23b interposed therebetween, and a change in the magnetic field caused by the rotation of the permanent magnet 24 fixed to the spindle portion 23a is detected by the GMR sensor 12, thereby detecting the rotation position of the operating ring 7.

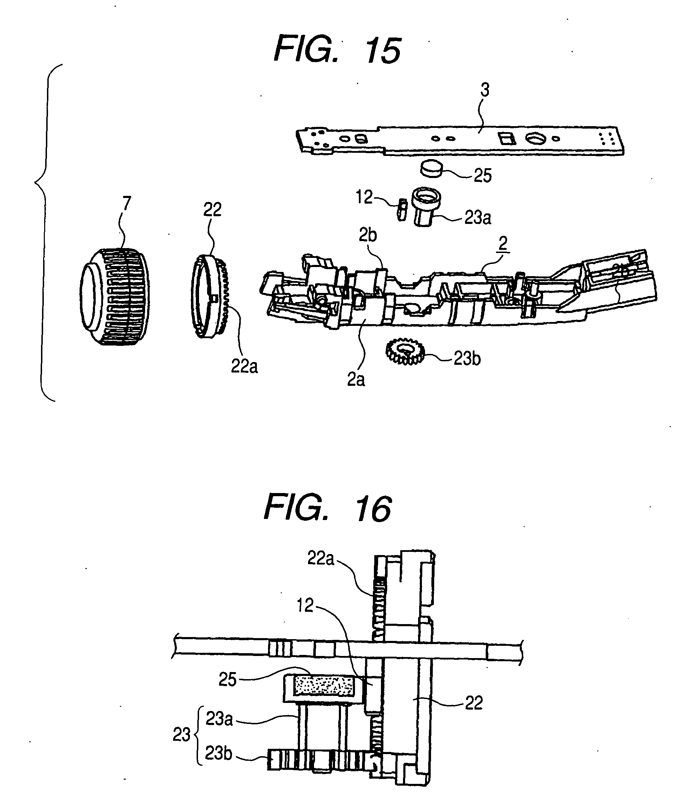

Fig. 15 is an exploded perspective view illustrating a stalk switch device according to a fourth embodiment of the invention, where a housing and other portions are omitted. Fig. 16 is an explanatory view illustrating a main portion of the stalk switch device according to the fourth embodiment. Like reference numerals denote like elements corresponding to Figs. 13 and 14, so that a detailed description thereof is omitted.

The stalk switch device of the fourth embodiment has a similar basic configuration to that of the third embodiment and is different therefrom in that the magnetization direction of the permanent magnet 25 fixed to the spindle portion 23a of the rotation shaft member 23 and the position of the GMR sensor 12 for detecting the change in magnetic field of the permanent magnet 25 are changed. Specifically, according to the embodiment, the north pole and the south pole are alternately magnetized in the peripheral direction of the permanent magnet 25, and the GMR sensor 12 is disposed to be adjacent to an outer peripheral surface of the permanent magnet 25. In addition, when the driving gear 22 is rotated along with the operating ring 7, the spindle portion 23a is rotated along with the gear portion 23b interposed therebetween, and the change in magnetic field caused by the rotation of the permanent magnet 25 fixed to the spindle portion 23a is detected by the GMR sensor 12, thereby detecting the rotation position of the operating ring 7.

## Claims

1. A stalk switch device comprising:
a cylindrical housing (1);
an operating ring (7) which is supported to rotate with respect to the housing (1);
a driven member which is driven in the housing (1) by the rotation of the operating ring (7);
a permanent magnet (9,24,25) fixed to the driven member;
a circuit board (3) disposed in the housing (1) in a longitudinal direction of the housing (1); and
a magnetic sensor (12) mounted on the circuit board (3),
wherein a change in magnetic field in the housing (1) caused by the movement of the permanent magnet (9,24,25) which moves along with the driven member is detected by the magnetic sensor (12).

2. The stalk switch device according to claim 1, further comprising a holder (2) fixed in the housing (1),
wherein the holder (2) rotatably retains the operating ring (7) and the driven member and retains the circuit board (3).

3. The stalk switch device according to claim 1 or claim 2, wherein the driven member is a cylindrical rotating member (8) which is formed integrally with the operating ring (7) and has a peripheral wall to which the permanent magnet (9,24,25) is fixed.

4. The stalk switch device according to claim 1, further comprising a holder (2) fixed in the housing (1),
wherein the operating ring (7) includes a driving gear (22) which has a number of teeth (22a) along a rotation direction of the operating ring (7) and is formed integrally with the operating ring (7), and
wherein the driven member (22) includes:
a spindle portion (23a) which extends in a direction perpendicular to an axial direction of the operating ring (7) to have an end portion to which the permanent magnet (9,24,25) is fixed, and is rotatably supported by the holder (8) about a rotation axis perpendicular to the axis of the operating ring (7); and
a gear portion (23b) which is formed integrally with the spindle portion (23a) and engaged with the teeth (22a) of the driving gear (22).

5. The stalk switch device according to claim 1, further comprising:
a holder (2) which is fixed in the housing (1), rotatably retains the operating ring (7), and retains the circuit board (3); and
a cylindrical rotating driving member (20) formed integrally with the operating ring (7),
wherein a peripheral wall of the rotating driving member (20) is provided with an engagement groove (20a), and
wherein the driven member (22) is a slider (21) which has an engagement protrusion (21a) engaged with the engagement groove (20a) and slides linearly with respect to the rotating driving member (20) with the engagement protrusion (21a) interposed therebetween upon rotating.

6. The stalk switch device according to claim 5, wherein an angle between the engagement groove (20a) and a rotation axis of the operating ring (7) in a central region of a movement range of the permanent magnet (9,24,25) is set to be greater than those in other regions.
